Europäisches Patentamt

European Patent Office

Office européen des brevets

(11) Veröffentlichungsnummer: **0 188 667**
**B1**

(12) **EUROPÄISCHE PATENTSCHRIFT**

(45) Veröffentlichungstag der Patentschrift: 30.01.91

(21) Anmeldenummer: 85113318.1

(22) Anmeldetag: 21.10.85

(51) Int. Cl.⁵: **G 01 N 31/16**

(54) **Verfahren zu titrimetrischen Gehaltsbestimmungen in chemischen Reaktionssystemen.**

(30) Priorität: **18.01.85 CH 224/85**

(43) Veröffentlichungstag der Anmeldung:
**30.07.86 Patentblatt 86/31**

(45) Bekanntmachung des Hinweises auf die
Patenterteilung:
**30.01.91 Patentblatt 91/05**

(84) Benannte Vertragsstaaten:
**DE FR GB**

(56) Entgegenhaltungen:
**DE-A-2 320 193    DE-C-2 617 346**
**DE-A-2 415 526**

**G-I-T FACHZEITSCHRIFT FÜR DAS
LABORATORIUM, Band 15, Nr. 11, 1971, Seiten
1249-1252; W. BAUER: "Ein neuer Vollautomat
für Serien-Titrationen"**

**Die Akte enthält technische Angaben, die nach
dem Eingang der Anmeldung eingereicht
wurden und die nicht in dieser Patentschrift
enthalten sind.**
(73) Patentinhaber: **Mettler-Toledo AG
Im Langacher
CH-8606 Greifensee (CH)**

(72) Erfinder: **Früh, Peter, Dr.
Schulhausstrasse 27
CH-8002 Zürich (CH)**

## Beschreibung

Die vorliegend beschriebene Erfindung betrifft ein Verfahren zur titrimetrischen Bestimmung von Komponenten in chemischen Reaktionssystemen gemäss Oberbegriff des Patentanspruches 1 sowie Anwendungen des Verfahrens gemäss Patentansprüchen 4 bis 6.

Hauptanwendungsgebiete des genannten Verfahrens sind z.B. die potentiometrischen, die kolorimetrischen und die coulometrischen Titrationen. Potentiometrische Bestimmungsmethoden beruhen auf der Ermittlung von pH-, Ionenaktivitäten, Redox- oder anderen chemischen Potentialen.

Aeltere derartige Verfahren laufen unter Einhaltung von konstanten Volumenschritten ab, wobei die potentiometrische Bestimmung lediglich der Kontrolle des Erreichens bzw. Ueberschreitens des oder der Aequivalenzpunkte dient. Das Volumen des jeweils periodisch zuzugebenden Titriermediums ist üblicherweise anfangs der Bestimmung einstellbar. Die mittels derartiger Methoden erreichbaren Genauigkeiten und Reproduzierbarkeiten der Resultate sind naturgemäss beschränkt.

Erst die Einführung der Zugabe von Reaktionskomponenten in Funktion von ebenfalls im voraus einstellbaren Potentialdifferenzen erlaubte es, deutlich verbesserte Resultatsgenauigkeiten zu erreichen.

Aus der DE-OS 2,320,193 sind ein Verfahren und eine Vorrichtung zur Endpunktbestimmung bei einer potentiometrischen Titration bekannt, bei welchen eine stufenweise Zugabe einer Menge der Titrierflüssigkeit in vorbestimmten Intervallen in Abhängigkeit von den pH-Signalen erfolgt.

Bei Annäherung an den Umschlagpunkt werden die Zugabemengen stufenweise kleiner bis eine vorbestimmte mminimale Zugabemenge erreicht ist. Eine endgültige minimale Zugabemenge wird während mehrerer Invervalle zugegeben, bis der Umschlagpunkt durch eine vorbestimmte Anzahl von Intervallen überschritten ist. Es kann also stets nur mit der Zugabe einer konstanten Menge der Einzeldosierung in vorbestimmten Intervallen gearbeitet werden.

Nach der DE-OS 2,415,526 wird eine Anordnung für eine potentiometrische Titration mit einem bekannten Endpunkt beschrieben, bei welcher der Kolben einer Titrierlösung enthaltenden Bürette schrittweise mit gesteuerter Schrittgeschwindigkeit in Abhängigkeit von der jeweils vorliegenden Potentialdifferenz bewegt wird. Das zugeführte Volumen des Titriermittels ist pro Schritt des Schrittmotors bei Annäherung an den Umschlagpunkt konstant. Diese bekannte Vorrichtung regelt somit die Zufuhrgeschwindigkeit des Titriermittels in Abhängigkeit von der Potentialdifferenz. Es erfolgt somit eine diskontinuierliche Zugabe des Titriermittels, wobei die Menge des zugefügten Titriermittels bei Annäherung an den Umschlagpunkt die gleiche für jede abfallende Frequenz ist.

Auch ist eine Titriereinrichtung bekannt (Bauer, "Ein neuer Vollautomat für Serientitrationen", G-I-T Fachzeitschrift für das Laboratorium, Band 15, Nr. 11, 1971, Seiten 1249-1252), in welcher der Endpunkt elektrochemisch bestimmt werden kann, so dass eine potentiometrische Titration vorliegt. Die Titration wird kontinuierlich durchgeführt und der jeweilige Endpunkt ist dabei bekannt. Das Titriermittel wird mit unterschiedlichen Geschwindigkeiten und unabhängig vom Gang der Titration zugegeben. Gegen den Endpunkt hin wird die Geschwindigkeit herabgesetzt.

Bei dem bekannten Verfahren der eingangs genannten Art gemäss dem Oberbegriff des Patentanspruches 1 wird die Grösse jeder Titriermitteldosierung in Abhängigkeit wenigstens des letzten Verhältnisses $\Delta S/\Delta V$ individuell berechnet und die Grösse der Titriermitteldosierungen jedes Mal herabgesetzt, wenn das Verhältnis $\Delta S/\Delta V$ grösser wird, und jedes Mal erhöht, wenn das Verhältnis $\Delta S/\Delta V$ kleiner wird (DE-OS 2,617,346, Offenlegungstag 4.11.1976). Die Dosierung des Zugabemediums wird mittels einer Digitalsteuerung dauernd dem Verlauf der Titrationskurve angepasst. Die Bestimmung wird dabei mit einem vorgängig gewählten Dosierungsvolumen gestartet, worauf, während des gesamten Ablaufes der Titration, jedes Titriermittel-Dosierungsvolumen auf der Basis der Aenderung des Messgrössenumformersignals $\Delta S$ pro zugesetzter Volumeneinheit $\Delta V$ in der Weise vorberechnet und gesteuert wird, dass das Titriermittel-Dosierungsvolumen um den Aequivalenzpunkt relativ am kleinsten ist. Eine obere als auch eine untere Grenze für die dosierte Menge wird durch Konstanten festgelegt. Auch bei diesem bekannten Verfahren erfolgt daher die Zugabe des Titriermittels lediglich in Abhängigkeit von der Aenderung einer elektrischen Messgrösse, wobei die untere und obere Grenze des Zugabeinkrementes festgelegt ist. Auch mit diesem bekannten Verfahren kann die Genauigkeit der Bestimmungen den praktischen Erfordernissen nicht in der gewünschten Weise angepasst oder gar die Titrationsdauer verkürzt werden, weil auch das kleinste Dosierungsvolumen des Titriermittels bei Annäherung an den Aequivalenzpunkt durch Konstanten begrenzt ist.

In Fresenius Z. Anal. Chem. (1982) 312, S. 346 bis 351, veröffentlichten S. Ebel und B. Reyer den zweiten Teil der Untersuchung über vollautomatische, rechnergesteuerte Titrationssysteme: Dynamische Steuerung der Volumenschritte. Darin werden für die Steuerungsalgorithmen von potentiometrischen Titrationen

die vorgängige Festlegung einer (absoluten) minimalen bzw. maximalen Reagenszugabe und

die Zugabe der einzelnen Titriermediumsdosierungen in Portionen mit Einstellenlassen und Bestimmen des Potentials zwischen den Portionen vorgeschlagen. Dadurch werden eigentlich konstante Potentialschritte, allerdings auf Kosten der Bestimmungsdauer, erreicht.

Es ist daher die Aufgabe der vorliegenden Erfindung, ein Verfahren der eingangs genannten Art zu schaffen, mit dem die Genauigkeit und die Dauer der Bestimmungen den jeweiligen Erfordernissen angepasst werden kann.

Die Aufgabe wird für das Verfahren der eingangs genannten Art erfindungsgemäss dadurch gelöst, dass die jeweils zugefügte Menge des Titriermittels auch in Abhängigkeit von der ermittelten bis dahin bereits zugefügten Gesamtmenge des Titriermittels eingestellt wird und 0,1% der schon zugefügten Gesamtmenge des Titriermittels nicht unterschreitet.

Bei dem Verfahren nach der Erfindung hängt die zuzugebende Titriermittelmenge ausser von der vorausgegangenen Aenderung der physikalisch-chemischen Grösse auch noch von der schon zugefügten Gesamtmenge des Titriermittels ab, was mit den bisher bekannten Verfahren nicht erreicht werden konnte. Dabei wird ein bestimmter Minimalwert, der von der schon zugefügten Gesamtmenge des Titriermittels abhängt, nicht unterschritten.

In vorteilhafter Weise kann mit dem Verfahren nach der Erfindung sowohl eine gesuchte Bestimmungsgenauigkeit wie auch eine praktische Bestimmungsdauer festgelegt bzw. erreicht werden. Es ist hier darauf hinzuweisen, dass beide genannten Charakteristiken für eine gewerbliche oder industrielle Anwendung des Verfahrens von grosser praktischer Bedeutung sind.

Auch nachfolgend soll verstanden werden, dass anstelle der einen Komponente im System auch mehrere Komponenten vorliegen können, dass das zuzufügende Titriermittel im Reaktionssystem auch erzeugt werden kann, und dass anstelle der Aenderung der physikalisch-chemischen Grösse auch ein davon abgeleiteter Wert benutzt werden kann.

Das Verfahren nach der Erfindung wird in vorteilhafter Weise in einer Vorrichtung durchgeführt, welche als Bauteile Behälter, Leitungen, Förder-, Mess-, Kontroll- und Regulierungsmittel aufweist. Zusätzlich besitzt dann die Vorrichtung Mittel zur Regulierung der jeweils zuzugebenden Menge des Titriermittels gemäss im Reaktionssystem zu kontrollierenden Aenderungen einer bestimmten physikalisch-chemischen Grösse oder gemäss einem davon abgeleiteten Wert, um die jeweils zuzugebende Menge auch in Funktion zur schon zugegebenen Gesamtmenge des Titriermittels zu regulieren und auf minimal 0,1% der schon zugegebenen Gesamtmenge des Titriermittels zu begrenzen.

Vorteilhafte Ausführungsformen des Verfahrens nach der Erfindung können mit den Massnahmen der Ansprüche 2 und 3 erreicht werden. So kann die jeweils zuzugebende Menge des Titriermittels 0,5 bzw. 1% der schonzugefügten Gesamtmenge des Titriermittels nicht unterschreiten. Die z.B. zuvor geschilderte Vorrichtung zur Durchführung des Verfahrens nach der Erfindung ist dann vorzugsweise mit Mitteln zur Regulierung der jeweils zuzugebenden Menge des Titriermittels unter Begrenzung auf minimal 0,5% bzw. 1% der schon zugegebenen Gesamtmenge des Titriermittels eingerichtet. Die genannten Mittel zur Regulierung der jeweils zuzugebenden Menge können entweder eingebaut oder derart ausgeführt sein, dass sie anfangs jeder Bestimmung die Eingabe der dafür notwendigen Parameter erlauben. Speziell gut geeignet ist eine derartige Vorrichtung zur Verwendung in automatischen Serien-Titrieranlagen.

Anwendung findet das erfindungsgemässe Verfahren hauptsächlich zur Ausführung von potentiometrischen Titrationen, d.h. von Titrationen basierend auf der potentiometrischen Bestimmung von pH-Werten, Ionenpotentialen oder Redoxpotentialen; es lassen sich damit aber auch kolorimetrische und coulometrische Titrationen ausführen.

Das erfindungsgemässe Verfahren wird nun anhand eines praktischen Anwendungsbeispiels näher erläutert:

Die Vorrichtung, mittels der die folgende Titration ausgeführt wird, ist eine vollständige Analysenstation für die titrimetrische Analyse. Sie ermöglicht die automatische Durchführung einer Titration einschliesslich Auswertung. Unter Einbezug des Probengewichtes wird das Analysenresultat in der gewünschten Einheit berechnet.

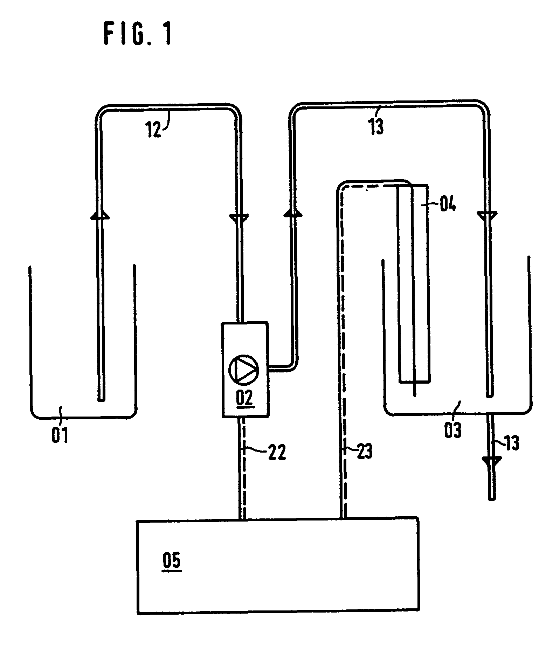

Die genannte Analysenstation ist in der beigelegten Figur 1 schematisch dargestellt:

Aus dem Vorratsbehälter 01 wird, mittels der automatischen Bürette (weiter bisherige Seite 5, Zeile 1) mit Fördereinrichtung 02, durch die Leitungen 11 und 12 die jeweils zuzugebende Menge der einen Reaktionskomponente in das Gefäss 03 gegeben. Im genannten Gefäss liegt die probenlösung mit der zu bestimmenden Komponente vor. Die Aenderung der bestimmten physikalisch-chemischen Grösse geschieht mittels der Messonde 04 im genannten Reaktionssystem. Sowohl Bürette wie Messonde sind über die Leitungen 22 bzw. 23 mit dem Mess-, Kontroll- und Regelgerät 05 verbunden, welches die zur Ausführung und Regulierung der hier beschriebenen Titration notwendige Hard- und Software aufweist. Das Gerät 05 weist die für die Eingabe von Daten bzw. Parametern notwendige Tastatur und eine Anzeige sowie, gegebenenfalls, einen Printer auf.

Für die Durchführung einer Titration sind vorerst Probengewicht und Probenidentifikationsnummer einzugeben. Alles weitere geschieht automatisch. Waage und Drucker für die Resultatprotokollierung können direkt angeschlossen werden. Spezielle Hilfsfunktionen ermöglichen die ebenso sichere Bestimmung der Titriermittel-Konzentration (Faktorstellung) wie die zu gewissen Analysen notwendige Blindwert-Bestimmung.

Neben der Möglichkeit der Parametereingaben betreffend die Konzentration der Reaktionskomponente in der Zugabelösung, betreffend das (Anfangs-)Dosiervolumen und betreffend verschiedene Titrationsund Auswertemethoden weist die hier eingesetzte Titriervorrichtung auch die Vorrichtung zur Einstellung des minimalen Inkrementes in Funktion zum schon dosierten Volumen auf. Dieses stellt, in der folgenden Titration, einen der wichtigsten Konfigurier-Parameter dar.

Die relevanten Angaben zur beispielsmässigen Ausführung sind die folgenden:

Titration von Sulfanilsäure mit Natriumnitrit.

Probe: Sulfanilsäure

Vorbereitung: 0,1 g Sulfanilsäure 60 ml 0,5 n HBr

Verrechnungskonstante: $\% \dfrac{M}{10 - 1} = 17{,}319$

Indikation: DM 140

Titriermittel: Natriumnitrit 0,1n

Die Titration geschah

1. gemäss Stand der Technik, im vorliegenden Fall mit Konfigurationsparameter (1) gleich 102 und

2. erfindungsgemäss, d.h. mit Konfigurationsparameter (1) gleich 2.

### Erste Titration

| Konfiguration | |
|---|---|
| (1) | 102 |
| (2) | 13 |
| (3) | .05 |
| (4) | 1 |
| (5) | 0 |
| (6) | 60 |
| (7) | 113 |
| (8) | 1 |
| (9) | 0 |
| (A) | 0 |
| (B) | 0 |
| (C) | 0 |

Konzentrationsbestimmung; Wertetabelle
Einwaage: g, .1024
Startsignal (mV): 394.7

### TABELLE 1:

| Inkrement buvol | Signalaenderung mV |
|---|---|
| .02850 | 121.7 |
| .01450 | 5.0 |
| .00750 | 1.8 |
| .01450 | 2.0 |
| .02000 | 2.1 |

### TABELLE 1 Fortsetzung:

| Inkrement buvol | Signalaenderung mV |
|---|---|
| .02000 | 1.4 |
| .02000 | 1.2 |
| .02000 | 1.0 |
| .02000 | 1.0 |
| .02000 | .8 |
| .02000 | .8 |
| .02000 | .7 |
| .02000 | .7 |
| .02000 | .6 |
| .02000 | .5 |
| .02000 | .6 |
| .02000 | .5 |
| .02000 | .5 |
| .02000 | .4 |
| .02000 | .5 |
| .02000 | .4 |
| .02000 | .3 |
| .02000 | .4 |
| .02000 | .4 |
| .02000 | .4 |
| .02000 | .4 |
| .02000 | .4 |
| .02000 | .4 |
| .02000 | .5 |
| .02000 | .5 |
| .02000 | 37.6 |
| .00400 | 31.4 |
| .00100 | 5.7 |
| .00200 | 10.6 |
| .00100 | 5.4 |

TABELLE 1 Fortsetzung:

| Inkrement buvol | Signalaenderung mV |
|---|---|
| .00150 | 6.7 |
| .00250 | 8.2 |
| .00350 | 9.4 |
| .00350 | 7.2 |
| .00550 | 26.8 |
| .00100 | 3.6 |
| .00200 | 1.4 |
| .00100 | .9 |
| .00250 | 1.3 |
| .00500 | 1.9 |
| .01000 | 2.3 |
| .01950 | 3.0 |
| .02000 | 2.0 |
| .02000 | 1.4 |
| .02000 | 1.1 |
| .02000 | .9 |
| .02000 | .7 |
| .02000 | .6 |
| .02000 | .6 |
| .02000 | .4 |
| .02000 | .4 |
| .02000 | .4 |
| .02000 | .3 |
| .02000 | .2 |
| .02000 | .2 |
| .02000 | .2 |
| .02000 | .3 |
| .02000 | .1 |
| .00950 | .1 |

Aequivalenzvolumen: 0,60716 buvol

Die Titration gemäss dem Stand der Technik lieferte also, in 64 Titrationsschritten, ein Totalvolumen an Titriermittel am Neutralpunkt von 0,60716 Bürettenvolumen (für 0,1024 g Einwaage). Diese Titration dauerte 23 Minuten lang.

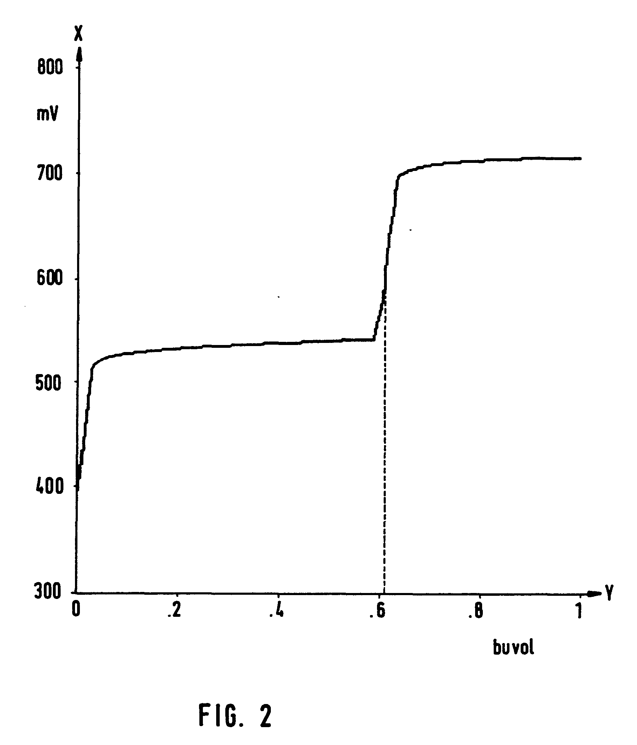

Die Werte aus der obigen Tabelle 1 sind zusätzlich in Figur 2 dargestellt:

Die x-Achse zeigt das Bürettenvolumen (in Anteilen); die y-Achse das Signal (in mV).

Zweite Titration

Konfiguration

| (1) | 2 |
|---|---|
| (2) | 13 |
| (3) | .05 |
| (4) | 1 |
| (5) | 0 |
| (6) | 60 |
| (7) | 113 |
| (8) | 1 |
| (9) | 0 |
| (A) | 0 |
| (B) | 0 |
| (C) | 0 |

Konzentrationsbestimmung; Wertetabelle
Einwaage: g, .1028
Startsignal (mV): 498.5

TABELLE 2

| Inkrement buvol | Signalaenderung mV |
|---|---|
| .02B50 | 3.6 |
| .01450 | 1.6 |
| .00750 | .8 |
| .01450 | 1.2 |
| .02000 | 1.4 |
| .02000 | 1.1 |
| .02000 | 1.2 |
| .02000 | .9 |
| .02000 | .8 |

TABELLE 2 Fortsetzung:

| Inkrement buvol | Signalaenderung mV |
|---|---|
| .02000 | .8 |
| .02000 | .8 |
| .02000 | .7 |
| .02000 | .7 |
| .02000 | .7 |
| .02000 | .6 |
| .02000 | .7 |
| .02000 | .5 |
| .02000 | .4 |
| .02000 | .5 |
| .02000 | .4 |
| .02000 | .4 |
| .02000 | .5 |
| .02000 | .4 |
| .02000 | .5 |
| .02000 | .6 |
| .02000 | .7 |
| .02000 | 123.8 |
| .00600 | 20.4 |
| .00600 | 14.7 |
| .00600 | 9.0 |
| .01250 | 6.4 |
| .00650 | 2.4 |
| .01250 | 3.1 |
| .02000 | 3.1 |
| .02000 | 1.8 |
| .02000 | 1.4 |
| .02000 | .7 |
| .02000 | .7 |
| .02000 | .6 |

TABELLE 2 Fortsetzung:

| Inkrement buvol | Signalaenderung mV |
|---|---|
| .02000 | .6 |
| .02000 | .6 |
| .02000 | .3 |
| .02000 | .4 |
| .02000 | .3 |
| .02000 | .3 |
| .02000 | .3 |
| .02000 | .3 |
| .02000 | .2 |
| .02000 | .2 |
| .02000 | .1 |
| .00550 | .1 |

Aequivalenzvolumen: 0,60414 buvol

Hier lauten die Ergebnisse:

Totalvolumen Titriermittel am Neutralpunkt: 0,60414 Bürettenvolumen (für 0,1028 g Einwaage); die Abweichung gegenüber der ersten Ausführung ist also vernachlässigbar.

Hingegen dauerte diese Titration nur 15 Minuten 20 Sekunden und die Anzahl Titrierschritte war lediglich 51. Das kleinste Inkrement beträgt denn auch in diesem Fall 0,006 buvol, im Gegensatz zur ersten Titration, wo die gleiche Grösse auf 0,001 absinkt.

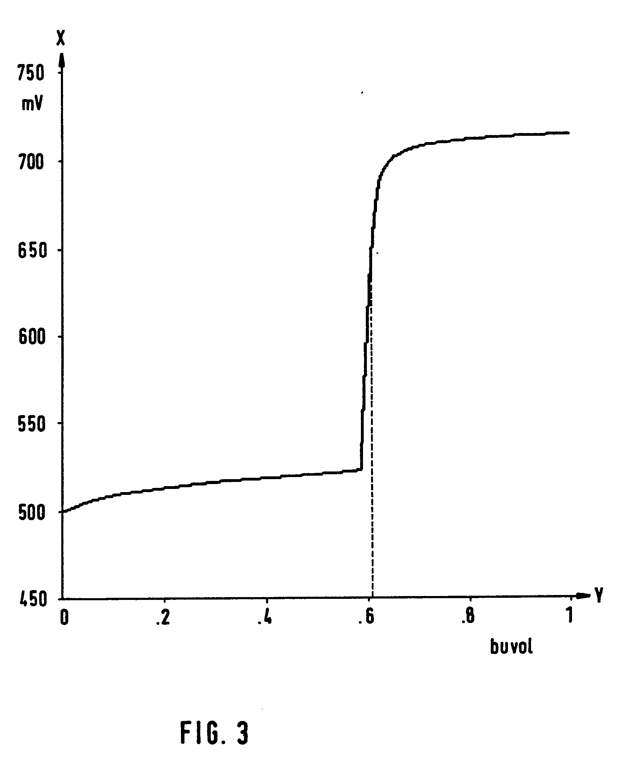

In diesem Fall sind die Tabellenwerte in Figur 3 dargestellt (gleiche Koordinatenbezeichnungen wie in Figur 2).

Am dargestellten Beispiel werde ein grosser Vorteil der Erfindung deutlich: Durch geeignete Wahl des jeweils minimal zuzudosierenden Inkrements kann, bei mässigen Ansprüchen an die Messgenauigkeit, die Titrationszeit (insbesondere im Aequivalenzbereich) deutlich gesenkt werden.

**Patentansprüche**

1. Verfahren zum titrimetrischen Bestimmen von Komponenten in chemischen Reaktionssystemen, bei welchem zu einer im System enthaltenen Komponente aufeinanderfolgend bestimmte Mengen eines Titriermittels zugefügt werden und bei dem eine Aenderung einer bestimmten physikalischchemischen Grösse im Reaktionssystem gemessen und überwacht wird, welche Aenderung der Umsetzung der Reaktionskomponente mit dem Titriermittel entspricht, und bei dem die bis dahin zugefügte Gesamtmenge des Titriermittels ermittelt wird, wobei das Titriermittel jeweils in einer Menge zugefügt wird, welche in Abhängigkeit von der Messung der unmittelbar vorangegangenen Aenderung der physikalisch-chemischen Grösse infolge der unmittelbar vorher zugefügten Menge des Titriermittels eingestellt wird, dadurch gekennzeichnet, dass die jeweils zugefügte Menge des Titriermittels auch in Abhängigkeit von der ermittelten bis dahin bereits zugefügten Gesamtmenge des Titriermittels eingestellt wird und 0,1% der schon zugefügten Gesamtmenge des Titriermittels nicht unterschreitet.

2. Verfahren nach Patentanspruch 1, dadurch gekennzeichnet, dass die jeweils zuzugebende Menge des Titriermittels 0,5% der schon zugefügten Gesamtmenge nicht unterschreitet.

3. Verfahren nach Patentanspruch 1, dadurch gekennzeichnet, dass die jeweils zuzugebende Menge des Titriermittels 1% der schon zugefügten Gesamtmenge nicht unterschreitet.

4. Anwendung des Verfahrens nach Patentanspruch 1, in einem potentiometrischen Titrationsverfahren.

5. Anwendung des Verfahrens nach Patentanspruch 1 in einem coulometrischen Titrationsverfahren.

6. Anwendung des Verfahrens nach Patentanspruch 1 in einem kolorimetrischen Titrationsverfahren.

**Revendications**

1. Méthode de dosage titrimétrique de composants dans es systèmes réactionnels chimiques, dans laquelle des quantités déterminées d'un agent titrant sont ajoutées successivement à un composant présent dans le système et dans laquelle une variation d'une grandeur physicochimique donnée dans le système réactionnel est mesurée et conrôlée, variation qui correspond à la réaction du composant réactionnel avec l'agent titrant, et dans laquelle la quantité totale d'agent titrant jusqu'ici ajoutée est déterminée, l'agent titrant étant ajouté dans chaque cas en une quantité qui est établie en fonction de la mesure de la variation immédiatement précédente de la grandeur physicochimique due à la quantité d'agent titrant ajoutée juste avant, caractérisée en ce que la quantité d'agent titrant ajoutée dans chaque cas est établie également en fonction de la quantité totale déterminée d'agent titrant déjà ajoutée jusqu'ici et ne s'abaisse pas au-dessous de 0,1% de la quantité totale déjà ajoutée d'agent titrant.

2. Méthode suivant la revendication 1, caractérisée en ce que la quantité d'agent titrant devant être ajoutée dans chaque cas ne s'abaisse pas en dessous de 0,5% de la quantité totale déjà ajoutée.

3. Méthode suivant la revendication 1, caractérisée en ce que la quantité d'agent titrant devant être ajoutée dans chaque cas ne s'abaisse pas en dessous de 1% de la quantité totale déjà ajoutée.

4. Utilisation de la méthode suivant la revendication 1 dans un titrage potentiométrique.

5. Utilisation de la méthode suivant la revendication 1 dans un titrage coulométrique.

6. Utilisation de la méthode suivant la revendication 1 dans un titrage colorimétrique.

**Claims**

1. A process for titrimetrically determining components in chemical reaction systems, in which given amounts of a titrating agent are successively added to a component contained in the system and in which a variation in a given physical-chemical parameter in the reaction system is measured and monitored, which variation corresponds to the reaction of the reaction component with the titrating agent, and in which the total amount of titrating agent which has been added up to that point is ascertained, the titrating agent being added in a respective amount which is adjusted in dependence on the measurement of the immediately preceding variation in the physical-chemical parameter as a result of the immediately previously added amount of titrating agent, characterised in that the respective added amount of titrating agent is also adjusted in dependence on the ascertained total amount of titrating agent which has already been added up to that point, and does not fall below 0.1% of the total amount of titrating agent already added.

2. A process according to claim 1 characterised in that the respective amount of titrating agent to be added does not fall below 0.5% of the total amount already added.

3. A process according to claim 1 characterised in that the respective amount of titrating agent to be added does not fall below 1% of the total amount already added.

4. Use of the process according to claim 1 in a potentiometric titration process.

5. Use of the process according to claim 1 in a coulometric titration process.

6. Use of the process according to claim 1 in a colorimetric titration process.

# FIG. 1

FIG. 2

FIG. 3